# EUROPEAN PATENT SPECIFICATION

(11) **EP 1 367 309 B1**
(45) Date of publication and mention of the grant of the patent: **04.07.2007**
(21) Application number: 03011832.7
(22) Date of filing: 26.05.2003
(51) Int. Cl.: F16L 21/06

(54) **Pipe connection, particularly for exhaust pipes, and relative clamp**
Rohrverbindung, insbesondere für Abgasleitungen, und entsprechende Schelle
Raccord de tuyaux, en particulier pour conduits d'échappement, et collier de serrage correspondant

(30) Priority: 28.05.2002 IT TO20020451
(43) Date of publication of application: 03.12.2003
(73) Proprietor: Magneti Marelli Tubos de Escape, S.L., 08251 Santpedor (ES)
(72) Inventor: Francesco, Torres, 08251 Castellnou de Bages (ES); Alfredo, Gonzales, 08240 Manresa (ES)
(74) Representative: Jorio, Paolo

(56) References cited:
- DE-A- 2 626 715
- DE-A- 10 006 029
- DE-A- 19 626 185
- US-A- 2 341 164
- US-A- 2 806 724

## Description

The present invention relates to a pipe connection, particularly for exhaust pipes.

According to the preamble of claim 1, as disclosed by DE-A-26 26 715, in the case of exhaust pipes, to connect two pipes in airtight manner, one is inserted inside the other, and the outer pipe is tightened onto the inner one using a clamp. Commonly used clamps comprise an open annular portion terminating with two facing, circumferentially spaced end portions, which, in use, are brought together by a screw-nut screw assembly to tighten the clamp onto the outer pipe. The clamp is normally supplied already fitted to the outer pipe, and, to prevent it from moving, is welded integrally to the pipe.

The above connection method is unsatisfactory for various reasons. In particular, welding the clamp to the pipe limits the movement of the clamp with respect to the pipe when tightening it, thus resulting in uneven tightening pressure distribution once the clamp is tightened. Moreover, the stress concentration formed at the weld spot may result in the clamp working loose when transporting the pipe with the clamp already assembled, and may even result in damage to the pipe when tightening the clamp. When welding the clamp, the outer pipe may be accidentally pierced and/or parts may get into the pipe, making it difficult, if not impossible, to insert the inner pipe.

Finally, when tightening the clamp onto the pipe, one or both of the end portions may jam against the pipe, thus resulting in incisions and/or local deformation which may impair airtight sealing of the connection.

DE-A-196 26 185 discloses a pipe connection in which a clamp is kept in an angular and axial fixed position on a sleeve connecting two pipes.

It is an object of the present invention to provide a pipe connection designed to provide a straightforward, low-cost solution to the aforementioned drawbacks.

According to the present invention, there is provided a pipe connection, particularly for exhaust pipes, as claimed in claim 1.

A non-limiting embodiment of the present invention will be described by way of example with reference to the accompanying drawings, in which:
Figure 1 shows a side view of a preferred embodiment of the connection according to the present invention;
Figure 2 shows a section, with parts removed for clarity, along line II-II in Figure 1;
Figure 3 shows a side view of a detail in Figure 1;
Figures 4 and 5 show sections along respective lines IV-IV and V-V in Figure 3.

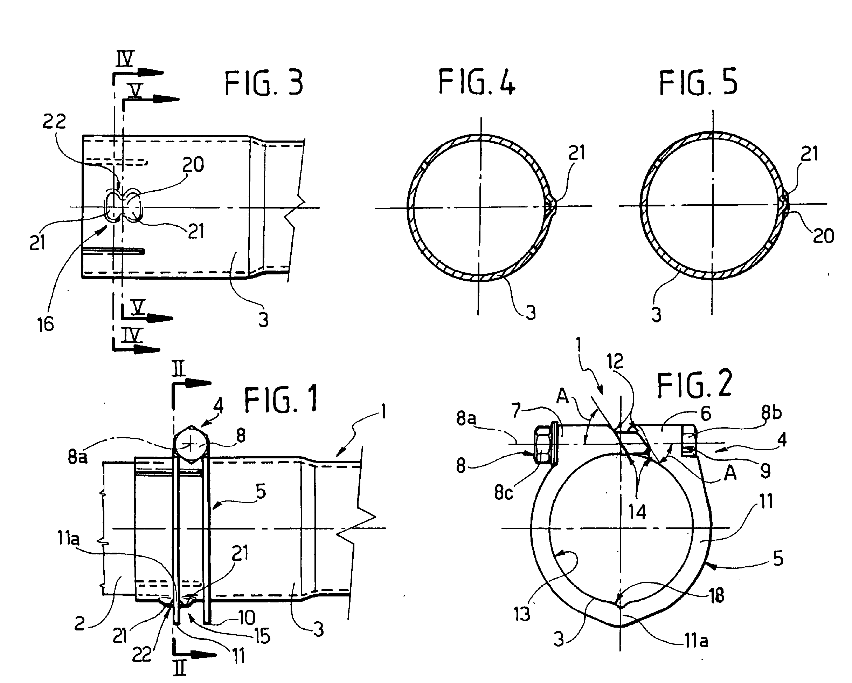

Number 1 in Figures 1 and 2 indicates a pipe connection, particularly for exhaust pipes. Connection 1 comprises two pipes 2 and 3 inserted partly one inside the other; and a clamp 4 fitted to the outer pipe 3.

Clamp 4 comprises an open annular intermediate portion 5; two facing, spaced, tubular end tightening portions 6 and 7 (Figure 2); and a threaded tightening tie 8 extending through tubular end portions 6 and 7 to tighten clamp 4, in use, onto outer pipe 3. Tie 8 comprises a head 8b retained in a fixed angular position inside a recess 9 on portion 6, and is fitted with a self-locking nut 8c screwed to a threaded end portion opposite head 8b.

In the example shown, intermediate portion 5 comprises two parallel, transversely spaced, platelike annular bodies 10 and 11 connected to each other by end portions 6 and 7, each of which is defined, on the side facing the other end portion, by an inclined end surface 12 forming an angle A of other than 90° with the axis 8a of tie 8. Each end surface 12 is connected by a respective convex surface portion 14 to the surface 13 internally defining intermediate portion 5.

As shown particularly in Figure 1, clamp 4 is retained on pipe 3 by a retaining device 15, which comprises a retaining member 16 (Figure 3) projecting radially from the outer surface of pipe 3 and defined, in the example shown, by a permanently deformed portion of the pipe punched from the inside.

With reference to Figure 2, retaining device 15 also comprises an angular retaining seat defined by a notch 18 formed in inner surface 13 of each annular body 10, 11, on the diametrically opposite side to tightening portions 6 and 7, and engaged angularly loosely by an intermediate radial projection 20 of retaining member 16. Intermediate projection 20 is retained inside notch 18 by two lateral projections 21 of retaining member 16, which are located on opposite axial sides of intermediate projection 20 and annular body 11 (Figure 1), and define an axial retaining seat 22 for a portion 11a of annular body 11.

Connection 1 is made by fitting clamp 4 to pipe 3 by inserting annular body 11 between lateral projections 21; pipe 2 is then inserted inside pipe 3, and clamp 4 tightened in known manner onto pipe 3. When tightening the clamp, the slack between notch 18 and intermediate projection 20 permits relative movement between clamp 4 and pipe 3 to distribute the tightening force evenly.

The particular geometry of end tightening portions 6 and 7 - especially the fact that they are defined by end surfaces 12 sloping with respect to axis 8a of tie 8 and connected to the inner surface of the intermediate portion by curved convex surfaces 14 - provides for optimum tightening pressure distribution, while at the same time preventing portions 6 and 7 from jamming against pipe 3, even in the event of forceful tightening of the clamp.

Moreover, during transport, and when both making and disconnecting connection 1, lateral projections 21 provide for retaining clamp 4 in the same angular and axial position with respect to pipe 3 at all times.

Clearly, changes may be made to connection 1 and clamp 4 as described herein without, however, departing from the scope of the present invention as defined by the claims. In particular, projections 20 and 21 and notch 18 may be formed and located otherwise than as shown by way of example.

Moreover, as opposed to being formed by permanent deformation of pipe 3, retaining member 16 may be a separate body connected in known manner to the outer periphery of pipe 3.

## Claims

1. A pipe connection (1), particularly for exhaust pipes, comprising a first pipe (2) partly inserted inside a tubular portion of a second pipe (3); a clamp (4) fitted to said tubular portion of said second pipe (3) and comprising an open annular intermediate tightening portion (5) forced, in use, only against said tubular portion; and retaining means (15) for retaining said clamp on said tubular portion of second pipe (3); **characterized in that** said retaining means (15) comprises a retaining member (16) connected integrally to said second pipe (3) and radially projecting away from the external lateral surface of said tubular portion; and a first angular retaining seat (18) and a second axial retaining seat (22), which are formed on one of said retaining member (16) and said clamp (4), and are engaged respectively by a first (20) and a second (11a) retaining portion carried by the other of said retaining member (16) and said clamp (4).

2. A connection as claimed in Claim 1, **characterized in that** at least said first retaining portion (20) engages said first angular retaining seat (18) radially loosely.

3. A connection as claimed in Claim 1 or 2, **characterized in that** said first (20) and said second (11a) retaining portion both engage the respective said angular retaining and axial retaining seats (18) (22) loosely.

4. A connection as claimed in any one of the foregoing Claims, **characterized in that** said first angular retaining seat (18) is formed on said clamp (4).

5. A connection as claimed in Claim 4, **characterized in that** said first angular retaining seat (18) is defined by a notch formed on the inner periphery of said open annular tightening portion (10) (11).

6. A connection as claimed in any one of the foregoing Claims, **characterized in that** said second axial retaining seat (22) is formed on said retaining member (16).

7. A connection as claimed in Claim 6, **characterized in that** said second axial retaining seat (22) is defined by two axially spaced radial shoulders (21) of said retaining member (16).

8. A connection as claimed in Claim 7, **characterized 15 in that** said second retaining portion (11a) extends between said radial shoulders.

9. A connection as claimed in any one of the foregoing claims, **characterized in that** an angular retaining seat (18) is formed on said open annular intermediate tightening portion (5) and engaged radially loosely by a radial projection (20) projecting from said tubular portion.

10. A connection as claimed in Claim 9, **characterized in that** said open annular intermediate tightening portion (5) comprises at least one platelike annular body (11), and said angular retaining seat (18) is defined by a radial notch formed on said platelike annular body (11).

11. A connection as claimed in Claim 9 or 10, **characterized in that** said clamp also comprises two end tightening portions (6) (7) spaced apart and connected to respective ends of said open annular intermediate tightening portion (5); and a tie (8) for tightening the end tightening portions (6) (7); said end tightening portions (6)(7) being defined by respective end surfaces (12) facing each other and forming respective angles (A) of other than 90° with the axis (8a) of said tie (8).

12. A connection as claimed in Claim 11, **characterized in that** said open annular intermediate tightening portion (5) is defined by an inner surface (13) connected to each of said end surfaces (12) by a respective convex surface (14).

## Patentansprüche

1. Rohrverbindung (1), insbesondere für Abgasrohre, umfassend ein erstes Rohr (2), das teilweise in einen röhrenförmigen Abschnitt eines zweiten Rohrs (3) eingeführt ist; eine Schelle (4), die an den röhrenförmigen Abschnitt des zweiten Rohrs (3) angebaut ist und einen offenen ringförmigen Zwischenbefestigungsabschnitt (5) umfasst, der bei Verwendung nur gegen den röhrenförmigen Abschnitt gedrückt wird; und eine Halteeinrichtung (15) zum Halten der Schelle auf dem röhrenförmigen Abschnitt des zweiten Rohrs (3); **dadurch gekennzeichnet, dass** die Halteeinrichtung (15) ein Halteelement (16), das integral mit dem zweiten Rohr (3) verbunden ist und radial weg von der äußeren Seitenfläche des röhrenförmigen Abschnitts vorsteht; und einen ersten Winkelhaltesitz (18) und einen zweiten axialen Haltesitz (22) umfasst, die auf einem des Halteelements (16) und der Schelle (4) gebildet sind und jeweils in einen ersten (20) und einen zweiten (11a) Halteabschnitt eingreifen, die von dem jeweils anderen des Halteelements (16) und der Schelle (4) getragen werden.

2. Verbindung nach Anspruch 1, **dadurch gekennzeichnet, dass** zumindest der erste Halteabschnitt (20) in den Winkelhaltesitz (18) radial lose eingreift.

3. Verbindung nach Anspruch 1 oder 2, **dadurch gekennzeichnet, dass** der erste (20) und der zweite (11a) Halteabschnitt beide in die jeweiligen Winkelhalte- und axialen Haltesitze (18), (20) lose eingreifen.

4. Verbindung nach einem der voranstehenden Ansprüche, **dadurch gekennzeichnet, dass** der erste Winkelhaltesitz (18) auf der Schelle (4) gebildet ist.

5. Verbindung nach Anspruch 4, **dadurch gekennzeichnet, dass** der erste Winkelhaltesitz (18) durch eine Nut definiert ist, die auf dem inneren Umfang des ringförmigen Befestigungsabschnitts (10), (11) gebildet ist.

6. Verbindung nach einem der voranstehenden Ansprüche, **dadurch gekennzeichnet, dass** der zweite axiale Haltesitz (22) auf dem Halteelement (16) gebildet ist.

7. Verbindung nach Anspruch 6, **dadurch gekennzeichnet, dass** der zweite axiale Haltesitz (22) durch zwei axial beabstandete radiale Schultern (21) des Halteelements (16) gebildet ist.

8. Verbindung nach Anspruch 7, **dadurch gekennzeichnet, dass** der zweite Halteabschnitt (11a) zwischen den radialen Schultern verläuft.

9. Verbindung nach einem der voranstehenden Ansprüche, **dadurch gekennzeichnet, dass** ein Winkelhaltesitz (18) an dem offenen ringförmigen Zwischenbefestigungsabschnitt (5) gebildet ist und radial lose in den einen Radialvorsprung (20) eingreift, der von dem röhrenförmigen Abschnitt vorsteht.

10. Verbindung nach Anspruch 9, **dadurch gekennzeichnet, dass** der offene ringförmige Zwischenbefestigungsabschnitt (5) zumindest einen plattenähnlichen ringförmigen Körper (11) umfasst und dass der ringförmige Haltesitz (18) durch eine radiale Nut definiert ist, die auf dem plattenähnlichen ringförmigen Körper (11) gebildet ist.

11. Verbindung nach Anspruch 9 oder 10, **dadurch gekennzeichnet, dass** die Schelle auch zwei Endbefestigungsabschnitte (6), (7), die beabstandet und mit jeweiligen Enden des offenen ringförmigen Zwischenbefestigungsabschnitts (5) verbunden sind; und ein Spannelement (8) zum Befestigen der Endbefestigungsabschnitte (6), (7) umfasst, wobei die Endbefestigungsabschnitte (6), (7) durch jeweilige Endflächen (12) definiert sind, die einander gegenüberstehen und jeweilige Winkel (A) mit Ausnahme von 90° mit der Achse (8a) des Spannelements (8) bilden.

12. Verbindung nach Anspruch 11, **dadurch gekennzeichnet, dass** der offene ringförmige Zwischenbefestigungsabschnitt (5) durch eine Innenfläche (13), die mit jeder der Endflächen (12) durch eine jeweilige konvexe Fläche (14) verbunden ist, definiert ist.

## Revendications

1. Raccord de tuyaux (1), en particulier pour des tuyaux d'échappement, comprenant un premier tuyau (2) partiellement inséré à l'intérieur d'une portion tubulaire d'un deuxième tuyau (3); un collier (4) ajusté à ladite portion tubulaire dudit deuxième tuyau (3) et comprenant une portion de serrage intermédiaire annulaire ouverte (5) forcée, lors d'une utilisation, uniquement contre ladite portion tubulaire; et un moyen de retenue (15) pour retenir ledit collier sur ladite portion tubulaire du deuxième tuyau (3); **caractérisé en ce que** ledit moyen de retenue (15) comprend un organe de retenue (16) connecté intégralement audit deuxième tuyau (3) et se projetant radialement hors de la surface latérale externe de ladite portion tubulaire; et un premier siège de retenue angulaire (18) et un deuxième siège de retenue axial (22), qui sont formés sur l'un dudit organe de retenue (16) et dudit collier (4), et sont engagés respectivement par une première (20) et une deuxième (11a) portions de retenue portées par l'autre dudit organe de retenue (16) et dudit collier (4).

2. Raccord comme revendiqué dans la revendication 1, **caractérisé en ce qu'**au moins ladite première portion de retenue (20) engage ledit première siège de retenue angulaire (18) de manière desserrée radialement.

3. Raccord comme revendiqué dans la revendication 1 ou 2, **caractérisé en ce que** ladite première (20) et ladite deuxième (11a) portions de retenue engagent toutes deux lesdits sièges de retenue angulaire et de retenue axial respectifs (18) (22) de manière desserrée.

4. Raccord comme revendiqué dans l'une quelconque des revendications précédentes, **caractérisé en ce que** ledit premier siège de retenue angulaire (18) est formé sur ledit collier (4).

5. Raccord comme revendiqué dans la revendication 4, **caractérisé en ce que** ledit premier siège de retenue angulaire (18) est défini par une encoche formée sur la périphérie interne de ladite portion de serrage annulaire ouverte (10) (11).

6. Raccord comme revendiqué dans l'une quelconque des revendications précédentes, **caractérisé en ce que** ledit deuxième siège de retenue axial (22) est formé sur ledit organe de retenue (16).

7. Raccord comme revendiqué dans la revendication 6, **caractérisé en ce que** ledit deuxième siège de retenue axial (22) est défini par deux épaulements radiaux espacés axialement (21) dudit organe de retenue (16).

8. Raccord comme revendiqué dans la revendication 7, **caractérisé en ce que** ladite deuxième portion de retenue (11a) s'étend entre lesdits épaulements radiaux.

9. Raccord comme revendiqué dans l'une quelconque des revendications précédentes, **caractérisé en ce qu'**un siège de retenue angulaire (18) est formé sur ladite portion de serrage intermédiaire annulaire ouverte (5) et engagé de manière desserrée radialement par une projection radiale (20) se projetant depuis ladite portion tubulaire.

10. Raccord comme revendiqué dans la revendication 9, **caractérisé en ce que** ladite portion de serrage intermédiaire annulaire ouverte (5) comprend au moins un corps annulaire comme une plaque (11), et ledit siège de retenue angulaire (18) est défini par une encoche radiale formée sur ledit corps annulaire comme une plaque (11).

11. Raccord comme revendiqué dans la revendication 9 ou 10, **caractérisé en ce que** ledit collier comprend également deux portions de serrage d'extrémités (6) (7) éloignées et reliées à des extrémités respectives de ladite portion de serrage intermédiaire annulaire ouverte (5); et un dispositif de serrage (8) pour serrer les portions de serrage d'extrémités (6) (7); lesdites portions de serrage d'extrémités (6) (7) étant définies par des surfaces d'extrémités respectives (12) se faisant face et formant des angles respectifs (A) autres que des angles de 90° avec l'axe (8a) dudit dispositif de serrage (8).

12. Raccord comme revendiqué dans la revendication 11, **caractérisé en ce que** ladite portion de serrage intermédiaire annulaire ouverte (5) est définie par une surface interne (13) reliée à chacune desdites surfaces d'extrémités (12) par une surface convexe respective (14)
